# EUROPEAN PATENT SPECIFICATION

(11) **EP 2 954 373 B1**
(45) Date of publication and mention of the grant of the patent: **24.04.2019**
(21) Application number: 14749608.7
(22) Date of filing: 05.02.2014
(51) Int. Cl.: B41M 5/337, C09D 11/10, C09D 11/50

(54) **CHEMICAL COATING FOR A LASER-MARKABLE MATERIAL**
CHEMISCHE BESCHICHTUNG FÜR LASERMARKIERBARES MATERIAL
REVÊTEMENT CHIMIQUE DESTINÉ À UN MATÉRIAU POUVANT SUBIR UN MARQUAGE AU LASER

(30) Priority: 06.02.2013 US 201313761051
(43) Date of publication of application: 16.12.2015
(73) Proprietor: Fujifilm Hunt Chemicals US, Inc., Allendale, NJ 07401 (US)
(72) Inventor: SUSUKI, Tatsuya, Allendale, New Jersey 07401 (US); MORRONE, Yuka, Allendale, New Jersey 07401 (US); WHITEHOUSE, Richard, Allendale, New Jersey 07401 (US)
(74) Representative: Boult Wade Tennant LLP
(86) International application number: PCT/US2014/014949
(87) International publication number: WO 2014/124052

(56) References cited:
- EP-A1- 2 716 466
- GB-A- 2 210 702
- US-A- 4 428 978
- US-A- 5 948 607
- US-B1- 6 319 291
- US-B2- 7 410 744

## Description

### PRIORITY

The present patent application is a continuation-in-part of and incorporates by reference the corresponding patent application serial no. 13/353,095, titled, "Chemical Coating Composition for Forming a Laser-Markable Material and a Laser-Markable Material" filed on January 18, 2012.

### BACKGROUND OF THE INVENTION

### Field of the Invention

The embodiment of the present invention relates to a chemical coating composition, an image recording material using the chemical coating composition, and an image recording method using the chemical coating composition. More particularly, the embodiment of the present invention relates to a chemical coating composition for recording an image on a recording material that forms a color by irradiation with a laser beam.

### Description of the Related Art

On beverage cans, beverage containers, food containers, medicine containers, cosmetics containers, packaging materials, electronic components, electric parts, automotive components and the like (hereinafter referred to as "containers"), a manufacturing lot number, manufacturing date, model, name of manufacturer, and the like are, for example, marked by characters, symbols, marks, patterns, barcodes or the like (hereinafter referred to as "marks").

As one type of marking method, a method of directly printing a colored printing ink on containers by pad printing, screen printing, an ink jet method or the like, and a method of attaching labels having marks printed thereon are used. In the direct printing method, however, printing may be difficult depending on the shape of the container to be printed on, and in the method of attaching printed labels, a wide variety of labels must be prepared for respective types of marks.

To solve these problems, laser marking methods have come to be used in which a laser marking layer (hereinafter referred to as "layer"), composed of a color former and a developer, is provided on containers, and a laser beam is irradiated on the layer to cause a chemical reaction to form a color (see, for example, Japanese Patent Application Laid-Open (JP-A) No. 2007-152686, U.S. Patent (U.S. Pat.) No. 7410744). This method is superior in productivity to the previous methods and thus is suitable for forming marks on containers.

More recently, a coating composition toward using the laser marking method was improved to increase the optical density of a mark in the coating formed by laser irradiation (Application No.:13/353,095).

However, the amount of coating composition in the coating layer was not sufficient, and sometimes this caused an insufficient optical density of a mark in the coating formed by laser irradiation. In addition, coating defects within the coating composition on the support were increased. EP2716466A1 relates to a thermal recording material containing stilbene disulphonic acid fluorescent whitening agent. GB2210702A relates to a heat sensitive recording material.

### SUMMARY OF THE INVENTION

The embodiments of the present invention have been made in view of the above circumstances and provide a coating composition, a recording material, and a recording method that overcome the disadvantages of the prior art.

According to one aspect of the embodiments of the present invention, there is provided a chemical coating composition according to claim 1.

A chemical coating composition of the present invention, wherein the composition includes at least one color-forming component which has a microcapsule.

A chemical coating composition of the present invention, wherein the water soluble polymer is selected from polyvinyl alcohol and modified products of polyvinyl alcohol.

A chemical coating composition of the present invention, wherein the water soluble compound has a molecular weight of from 200 to 5,000.

A chemical coating composition of the present invention, wherein the acidic groups of the water soluble compound are partially- or completely-neutralized.

A reference example provides recording material for recording an image by irradiation of a laser beam, the recording material composed of a recording layer on a support, wherein the recording layer is composed of at least one water soluble polymer whose viscosity of a 4% aqueous solution is more than 29mPa·s at 20°C, and at least one water soluble compound which has at least one acidic group and at least one basic group, and has absorption maximum at more than 330nm in aqueous solution.

A reference example provides recording material for recording an image by irradiation of a laser beam, the recording material composed of a recording layer on a support, and the recording material has no protective layer on the recording layer, wherein the recording layer includes at least one water soluble polymer whose viscosity of a 4% aqueous solution is more than 29mPa·s at 20°C, and at least one water soluble compound which has at least one acidic group and at least one basic group, and has absorption maximum at more than 330nm in aqueous solution, and at least one plastic dispersion.

According to a further aspect, the present invention provides a method of recording an image according to claim 4.

### DETAILED DESCRIPTION OF THE INVENTION

The embodiment of the present invention is based on the following new findings.
1) The combination of one or more water soluble polymer whose viscosity of a 4% aqueous solution is more than 29mPa·s at 20°C with one or more water soluble compound which has at least one acidic group and at least one basic group, and has absorption maximum at more than 330nm in aqueous solution incorporated into a chemical coating composition can significantly increase the laydown amount on support, and that causes significantly increase of optical density of a mark formed by laser irradiation.
2) The combination of one or more water soluble polymer whose viscosity of a 4% aqueous solution is more than 29mPa·s at 20°C with one or more water soluble compound which has at least one acidic group and at least one basic group, and has absorption maximum at more than 330nm in aqueous solution incorporated into a chemical coating composition can significantly improve coating defect on substrate.

As a result of intensive investigations, the present inventors have found that high coating amount can be provided and this causes high optical density of a mark formed by laser irradiation by a chemical coating composition composed of at least one water soluble polymer whose viscosity of a 4% aqueous solution is more than 29mPa·s at 20°C, and at least one water soluble compound which has at least one acidic group and at least one basic group, and has absorption maximum at more than 330nm. And the present inventors have found that less coating defect can be provided by a chemical coating composition composed of at least one water soluble polymer whose viscosity of a 4% aqueous solution is more than 29mPa·s at 20°C, and at least one water soluble compound which has at least one acidic group and at least one basic group, and has absorption maximum at more than 330nm.
While the chemical principals of the embodiments described herein may not be fully understood, the chemical compositions and mechanisms elaborated below are presented as best understood at the time of the filing of the present application.

The coating composition of the embodiment of the present invention is applied as a coating on the support. The coating process is conducted by printing press and other methods.

In printing, the amount of coating is related to transfer rate from ink pan to roll and/or roll to roll and/or roll to the support.

Compared with the coating composition containing a low viscosity PVA or a high viscosity PVA without a certain type of water soluble compound, the coating composition containing at least one high viscosity PVA and a certain type of water soluble compound has a higher viscosity at high shear force and a higher thixotropic index value.

When the coating composition is transferred from ink pan to roll and/or roll to roll and/or roll to the support, high shear forces will be applied to the composition. High viscosity at high shear force may have an effect on the amount of coating on the support, including causing an increase of coating amount.

High thixotropic index value means large differences between the low shear viscosity and the high shear viscosity so in this case it means large differences in viscosities on press rollers and on the support (after being printed).

The coating composition which contains at least one high viscosity PVA and at least a certain type of water soluble compound produces wide differences in viscosities on press and on the support, thus the high viscosity may lower the composition's fluidity and it is unlikely to produce uneven distribution in the composition after being printed (including during the drying process). Because uneven distribution of the coating composition after printing and drying is less likely to occur, improvements to coating defects will be produced on the support.

In the present description, "thixotropic index value" is defined as the "ratio of viscosity at a shear rate of 1.6 (l/s) to viscosity at a shear rate of 16 (l/s)". Furthermore, the thixotropic index value is an indicator of thixotropy, and the larger this value, the greater the thixotropy.

The coating composition of the embodiment of the present invention has thixotropy such that the viscosity decreases as a greater shear stress is applied (the larger the shear rate), and the viscosity increases by allowing it to stand undisturbed following the application of the shear stress.

The "thixotropic index value" is abbreviated as the "TI value" in the present description.

The chemical coating composition used to fabricate the recording material that is used in the recording method of the embodiment of the present invention contains the components specified in claim 4, and may further contain other components as needed.

### ((Water soluble polymer))

The water soluble polymer which is used in the embodiment of the present invention comprises polyvinyl alcohol and modified products of polyvinyl alcohol. The viscosity of a 4% aqueous solution of the water soluble polymer is from 35 to 110 mPa·s at 20°C and may be added separately from other water soluble polymer.

This polymer may be used as a binder in the recording layer and/or a protective colloid of the microcapsule in the composition and/or a dispersion stabilizer and/or a viscosity modifier.

Examples of the polymer contained in the composition include polyvinyl alcohol and modified products, hydroxyethylcellulose, hydroxypropylmethylcellulose, epichlorohydrin-modified polyamide, ethylene-maleic anhydride copolymer, styrene-maleic anhydride copolymer, isobutylene-maleic anhydride-salicylic acid copolymer, polyacrylic acid, polyacrylic amide, methylol-modified polyacrylamide, starch derivatives, casein, and gelatin.

Among these polymers, polyvinyl alcohol and its derivatives, hydroxyethylcellulose, hydroxypropylmethylcellulose, polyacrylic acid, polyacrylic amide, methylol-modified polyacrylamide, starch derivatives, casein, and gelatin are preferable.

Polyvinyl alcohol and its derivatives, hydroxyethylcellulose, hydroxypropylcellulose, hydroxypropylmethylcellulose are most preferable since they are readily-accessible and have stability against change in the physical properties such as pH , temperature. A single water soluble polymer may be used or multiple water soluble polymers may be simultaneously used.

The viscosity of a 4% aqueous solution of the water soluble polymer is from 35mPa • s to 110mPa • s at 20°C, most from about 40mPa • s to 60mPa • s at 20°C.

If the viscosity of the water soluble polymer is less than 29mPa • s at 20°C, the effect of the present invention would not be sufficient.

If the viscosity of the water soluble polymer is more than 110mPa • s at 20°C, the viscosity of the chemical coating composition would be so high that it is hard to apply on printing and to be coated on the support.

Specific Examples of the water soluble polymer contained in the composition include KL-118(29-34mPa•s, Kuraray), PVA420H(29-35mPa•s, Kuraray), PVA224(40-48mPa•s, Kuraray), PVA224SB(40-48mPa•s, Kuraray), PVA224S(40-48mPa•s, Kuraray), PVA226(50-58mPa•s, Kuraray), PVA235(80-110mPa•s, Kuraray), PVA420(37-45mPa•s, Kuraray), PVA424H(45-51 mPa·s, Kuraray), PVA624(50-60mPa•s, Kuraray), PVA124(59.7-60.3mPa•s, Kuraray), Mowiol40-88(38-42mPa•s, Kuraray), Mowiol47-88(45-49mPa•s, Kuraray), Mowiol56-98(52-60mPa•s, Kuraray), Selvol165(62-72mPa•s, Sekisui Specialty Chemicals), Selvol350(62-72mPa•s, Sekisui Specialty Chemicals), Selvol443(53-63mPa•s, Sekisui Specialty Chemicals), Selvol540(45-55mPa•s, Sekisui Specialty Chemicals), Selvol840(45-55mPa•s, Sekisui Specialty Chemicals), Selvol540S(45-55mPa•s, Sekisui Specialty Chemicals), SP200(Daicel FineChem), SP400(Daicel FineChem), SE400(Daicel FineChem), AL-15F(Sumitomo Seika Chemicals), 60SH-50(Shinetsu Chemical), 65SH-50(Shinetsu Chemical).

The present invention is not limited to these.

If the quantity of the water soluble polymer is less than 0.1% w/w, the effect of the present invention would not be sufficient.

If the quantity of the water soluble polymer is more than 10% w/w, the optical density of a mark would become insufficient because of dilution of color-forming component by the polymer, and the viscosity of the chemical coating composition would be so high that it is hard to apply on printing and to be coated on the support.

The quantity of the water soluble polymer in the chemical coating composition is preferably from about 0.2% w/w to about 3% w/w,
most preferably from about 0.5% w/w to about 3% .

The water soluble polymer may be added in its own form or as an aqueous solution or as an organic solvent solution.

It is preferable to add the polymer as an aqueous solution in terms of dissolution time in the coating composition.

### ((water soluble compound))

The water soluble compound which is used in embodiment of the present invention may be any water soluble compound which has at least one acidic group and at least one basic group, and has absorption maximum at more than 330nm in aqueous solution.

This compound may cause change of rheological character of coating composition when combined with water soluble polymer whose viscosity of a 4% aqueous solution is more than 29mPa•s at 20°C in the coating composition.

Examples of the acidic group contained in the compound include
sulfo group, sodium sulfonato group, potassium sulfonato group, calcium sulfonato group, strontium sulfonato group, barium sulfonato group, aluminum sulfonato group, 4-(sodium sulfonato)phenylcarbamoylmethyl group, dodecylammonio sulfonato group, octadecylammonio sulfonato group, trimethyloctadecylammonio sulfonato group, sodium aminoethylsulfonate group, potassium aminoethylsulfonate group, calcium aminoethylsulfonate group, sodium aminobenzenesulfonate group,
potassium aminobenzenesulfonate group, calcium aminobenzenesulfonate group, sodium aminobenzenedisulfonate group, potassium aminobenzenedisulfonate group, calcium aminobenzenedisulfonate group,
dimethyldidecylammonio sulfonato group, carboxyl group, sodium carboxylate group, potassium carboxylate group, ammonium carboxylate group, 2-ammonium carboxylate-5-nitrobenzamidemethyl group and 4-carboxyphenylaminocarbonyl group. Among these acidic groups, sulfo group, sodium sulfonato group, potassium sulfonato group, calcium sulfonato group, sodium aminoethylsulfonate group, potassium aminoethylsulfonate group, sodium aminobenzenesulfonate group, potassium aminobenzenesulfonate group, sodium aminobenzenedisulfonate group, potassium aminobenzenedisulfonate group, carboxyl group, sodium carboxylate group, potassium carboxylate group are preferable.

Examples of the basic group contained in the compound include
amino group, methylamino group, ethylamino group, propylamino group, butylamino group, hexylamino group, octylamino group, dodecylamino group, octadecylamino group, hydroxyethylamino group, (hydroxyethyl)methylamino group,
(hydroxyethyl)ethylamino group,
hydroxyethoxyethylamino group, 2-hydroxypropylamino group,
dimethylamino group, diethylamino group, dibutylamino group, bis(2-hydroxyethyl)amino group, bis[2-(2-hydroxyethoxy)ethyl]amino group, bis(2-hydroxypropyl)amino group,
dimethylaminopropylamino group, diethylaminopropylamino group, diethylaminoethylamino group, dibutylaminopropylamino group, (3-amino-3-oxopropyl)(2-hydroxyethyl)amino group, morpholinyl group, _pyrrolidinyl group, piperidinyl group, 4-methyl piperazinyl group,
piperidinomethyl group, dimethylaminomethyl group, diethylaminomethyl group, dibutylaminomethyl group,
dimethylaminoethyloxy group, dimethylaminoethylthio group, dimethylaminopropylaminosulfonyl group, diethylaminopropylaminosulfonyl group, dibutylaminopropylaminosulfonyl group, morpholinoethylaminosulfonyl group, 4-aminophenylaminosulfonyl group, dimethylaminopropylaminocarbonyl group, 4-(diethylaminopropylaminocarbonyl)phenylaminocarbonyl group, dimethylaminomethylcarbonylaminomethyl group, diethylaminopropylaminomethylcarbonylaminomethyl group and dibutylaminopropylaminomethylcarbonylaminomethyl group.
Among these basic groups, methylamino group, hydroxyethylamino group, hydroxyethoxyethylamino group, 2-hydroxypropylamino group, dimethylamino group, diethylamino group, bis(2-hydroxyethyl)amino group, bis[2-(2-hydroxyethoxy)ethyl]amino group, bis(2-hydroxypropyl)amino group are preferable.

The wavelength of maximum absorption of aqueous solution of the water soluble compound is more than 330nm.
The wavelength of maximum absorption of aqueous solution of the water soluble compound is preferably from about 330nm to 500nm, most preferably from about 340nm to 450nm.

If the wavelength of maximum absorption of the water soluble compound is lower than 330nm, the effect of the present invention would not be sufficient. If the wavelength of maximum absorption of the water soluble compound is equal to or higher than 500nm, the compound may cause change of the color of coating composition and produce a lower contrast between the color of a mark formed by laser irradiation and the color of the unmarked area.

The molecular weight of the water soluble compound is from 200 to 5,000. The molecular weight of the water soluble compound is preferably from 500 to 3,000, most preferably from 800 to 2,000.

If the molecular weight of the water soluble compound is lower than 200 or equal to or higher than 5,000, the effect of the present invention would not be sufficient.

It is preferable to neutralize the acidic groups of the water soluble compound partially or completely in order to increase the solubility of the water soluble compound. The pH of aqueous solution of the compound is not lower than 4, the pH is preferably from 5 to 13, most preferably from 7 to 12.

The solubility in water at room temperature of the water soluble compound, which has at least one acidic group and at least one basic group and has absorption maximum at more than 330nm in aqueous solution, is equal to or higher than 1g/l.

It is preferably from 1g/l to 1000g/l, most preferably from 10g/l to 500g/l.

Specific examples of the water soluble compound contained in the composition include the following structures.(Acidic group(s) and basic group(s) are bonded to the structures).

Coumarin, 1,3-diphenyl-pyrazolines, 2,5-bis(benzoxazol-2-yl)-thiophene, 2-styrylnaptho-[1,2-d]-oxazole, phenylaminonaphto-[1,2-d]-oxazol-2-yl, 4,9-bis(1,2,3-triazol-4-yl)naphtho-[c]-[1,2,5]-thiadiazole, 4,7-bis(1,2,3-triazol-4-yl)benzo-[c]-[1,2,5]thiadiazole, 2,2'-stilbenedisulfonate, 4,4'-bis(2,2'-styryl sulfonate)biphenyl. See also U.S. Pat. No. 3,646,015, U.S. Pat. No. 3,346,502 and U.S. Pat. No. 3,393,153 for further examples of water soluble compound useful herein. The present invention is not limited to these.

Specific examples of the water soluble compound useful in the present invention are those having the structural formula:

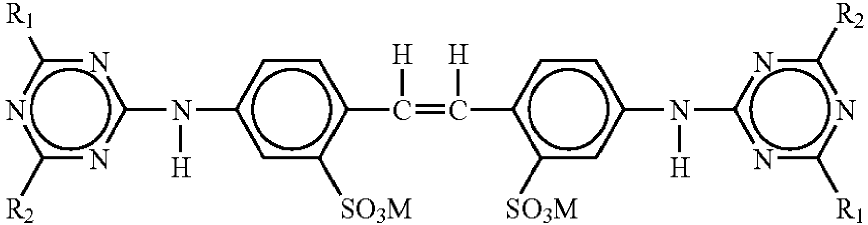

wherein R1 and R2 are selected from hydrogen, C1-C30 alkyl, C6-C30 aryl, C1-C30 alkylamino, chloro, hydroxy, amino, C1-C30 alkyloxy, C1-C30 arylamino, C1-C30 aryloxy, C1-C30 dialkylamino, C1-C30 diarylamino, NH-2-hydroxyethyl, N-2-bis-hydroxyethyl, N-2-hydroxyethyl-N-methyl, N-2-bis-ethoxyethy, NH-2-ethoxyethyl, N-2-bis-hydroxy-2-ethoxyethy, NH-2-hydroxy-2-ethoxyethyl, N-3-amino-3-oxopropyl-N-2-hydroxyethyl, N-2-bis-hydroxypropyl, morpholino, and mixtures thereof, and M is a salt-forming cation such as sodium or potassium.

Specific examples of the water soluble compound contained in the composition include the following compound. In parentheses, the "molecular weight of the water soluble compound" is abbreviated as the "Mw".

When in the above formula, R1 is anilino, R2 is N-2-bis-hydroxyethyl and M is a cation such as sodium, the compound is 4,4',-bis[(4-anilino-6-(N-2-bis-hydroxyethyl)-s-triazine-2-yl)amino]-2,2'-stilbenedisulfonic acid and disodium salt. (Mw=961)
This particular compound is commercially marketed under the tradename Tinopal-UNPA-GX by from Ciba Specialty Chemicals.

When in the above formula, R1 is anilino, R2 is N-2-hydroxyethyl-N-methyl and M is a cation such as sodium, the compound is 4,4'-bis[(4-anilino-6-(N-2-hydroxyethyl-N-methyl)-s-triazine-2-yl)amino]2,2'-stilbenedisulfonic acid disodium salt. (Mw=899)
This particular compound is commercially marketed under the tradename Tinopal 5BM-GX by from Ciba Specialty Chemicals.

When in the above formula, R1 is anilino, R2 is morphilino and
M is a cation such as sodium, the compound is 4,4'-bis[(4-anilino-6-morphilino-s-triazine-2-yl)amino]2,2'-stilbenedisulfonic acid, sodium salt. (Mw=925)
This particular compound is commercially marketed under the tradename Tinopal AMS-GX by from Ciba Specialty Chemicals.

When in the above formula, R1 is 4-sulfophenylamino, R2 is bis(2-hydroxypropyl)amino and M is a cation such as sodium, the compound is 4,4'-bis[(4-(4-sulfophenylamino)-6-(N-2-bis-hydroxypropyl)-s-triazine-2-yl)amino]2,2'-stilbenedisulfonic acid, tetra sodium salt. (Mw=1221)
This particular compound is commercially marketed under the tradename Tinopal ASP by from Ciba Specialty Chemicals.

When in the above formula, R1 is 4-sulfophenylamino, R2 is N-2-bis-hydroxyethyl and M is a cation such as sodium, the compound is 4,4',-bis[(4-(4-sulfophenylamino)-6-(N-2-bis-hydroxyethyl)-s-triazine-2-yl)amino]-2,2'-stilbenedisulfonic acid, tetra sodium salt. (Mw=1168)
This particular compound is commercially marketed under the tradename Tinopal PT LIQ by from Ciba Specialty Chemicals.

When in the above formula, R1 is 4-sulfophenylamino, R2 is (3-amino-3-oxopropyl)(2-hydroxyethyl)amino and M is a cation such as sodium, the compound is 4,4',-bis[(4-(4-sulfophenylamino)-6-(3-amino-3-oxopropyl)(2-hydroxyethyl)amino-s-triazine-2-yl)amino]-2,2'-stilbenedisulfonic acid, tetra sodium salt. (Mw=1219) This particular compound is commercially marketed under the tradename FLUORESCENT BRIGHTENER235 by from PCA Services.Inc.

When in the above formula, R1 is 2-sulfoethylamino, R2 is NH-2-hydroxy-2-ethoxyethyl and M is a cation such as sodium, the compound is 4,4'-bis[(4-(2-sulfoethylamino)-6-(NH-2-hydroxy-2-ethoxyethyl)-s-triazine-2-yl)amino]2,2'-stilbenedisulfonic acid, tetra sodium salt. (Mw=951)
This particular compound is commercially marketed under the tradename Illuminari-199 by from Kyung In Synthetic Corporation.

When in the above formula, R1 is 2,5-disulfophenylamino, R2 is N-2-bis-hydroxyethyl and M is a cation such as sodium, the compound is 4,4'-bis[(4-(2,5-disulfophenylamino)-6-(N-2-bis-hydroxyethyl)-s-triazine-2-yl)amino]2,2'-stilbenedisulfonic acid, hexa sodium salt. (Mw=1369)
This particular compound is commercially marketed under the tradename Blankophor FCD by from Blankophor GmH & Co.Kg.

When in the above formula, R1 is 2,5-disulfophenylamino, R2 is diethylamino and M is a cation such as sodium, the compound is 4,4'-bis[(4-(2,5-disulfophenylamino)-6-(diethylamino)-s-triazine-2-yl)amino]2,2'-stilbenedisulfonic acid, hexa sodium salt. (Mw=1305)
This particular compound is commercially marketed under the tradename Tinopal SFP by from Ciba Specialty Chemicals.

Preferred are a water soluble compound which includes at least one anilino moiety such as C.I. Fluorescent Brightener 32, also known as Blankophor B, Blankophor FCD, Tinopal AMS-GX, Tinopal ASP, Tinopal 5BM-GX, Tinopal PT LIQ, Tinopal SFP, Tinopal-UNPA-GX, FLUORESCENT BRIGHTENER235.

These water soluble compounds may be used singly or in combination of two or more kinds.

The quantity of the water soluble compound, which has at least one acidic group and at least one basic group and has absorption maximum at more than 330nm in aqueous solution, in the chemical coating composition is from 0.01% w/w to 5% w/w. The quantity of the water soluble compound in the chemical coating composition is preferably from about 0.05% w/w to about 3% w/w,
most preferably from about 0.1% w/w to about 2%.
If the quantity of the water soluble compound is less than 0.01% w/w or more than 5% w/w, the effect of the embodiment of the present invention would not be sufficient.

The water soluble compound may be added in its own form or as an aqueous solution or as an organic solvent solution.
It is preferable to add the polymer as an aqueous solution in terms of dissolution time in the coating composition.

### ((Color-Forming Component))

The color-forming component may be a component that has good transparency before laser exposure but quickly forms an image by laser exposure. Examples of the color-forming component include a two-component type color-forming component, which contains a substantially colorless color-forming component A and a substantially colorless color-forming component B that reacts with the color-forming component A to form an image. In the coating composition of the invention, a combination of at least one basic dye precursor(color-forming component A) and an electron-accepting compound(color-forming component B) is used, wherein the basic dye precursor is encapsulated in microcapsules.

### (color-forming component A)

The basic dye precursor which is used in the embodiment of the present invention may be any basic dye precursor that is substantially colorless, but not limited thereto. The precursor may have a nature of donating an electron to form a color, or accepting a proton from an acid to form a color, and is preferably a colorless compound having a partial skeleton of lactone, lactam, sultone, spiropyran, ester, amide or the like, the skeleton being opened or cleaved when the compound contacts with an electron-accepting compound.

Examples of the basic dye precursor include triphenylmethanephthalide compounds, fluorane compounds, phenothiazine compounds, indolylphthalide compounds, leuco auramine compounds, rohdamine lactam compounds, triphenylmethane compounds, triazene compounds, spiropyran compounds, fluorene compounds, pyridine compounds and pyrazine compounds.

Specific examples of the triphenylmethanephthalide compounds include compounds described in U.S. Reissued Pat. No. 23,024, and U.S. Pat. Nos. 3,491,111, 3,491,112, 3,491,116, and 3,509,174.

Specific examples of the fluorane compounds include compounds described in U.S. Pat. Nos. 3,624,107, 3,627,787, 3,641,011, 3,462,828, 3,681,390, 3,920,510, and 3,959,571.

Specific examples of the spiropyran compounds include compounds described in U.S. Pat. No. 3,971,808.

Specific examples of the pyridine compounds and the pyrazine compounds include compounds described in U.S. Pat. Nos. 3,775,424, 3,853,869 and 4,246,318.

Specific examples of the fluorene compounds include compounds described in JP-A No 63-094878.

Among these compounds, a particularly preferable example is 2-arylamino-3-[H, halogen, alkyl or alkoxy-6-substituted aminofluorane], which forms a black color.

Specific examples thereof include 2-anilino-3-methyl-6-diethylaminofluorane, 2-anilino-3-methyl-6-N-cyclohexyl-N-methylaminofluorane, 2-p-chloroanilino-3-methyl-6-dibutyl amino fluorane, 2-anilino-3-methyl-6-dioctylaminofluorane, 2-anilino-3-chloro-6-diethylaminofluorane, 2-anilino-3-methyl-6-N-ethyl-N-isoamylaminofluorane, 2-anilino-3-methyl-6-N-ethyl-N-dodecylaminofluorane, 2-anilino-3-methoxy-6-dibutylaminofluorane, 2-o-chloroanilino-6-dibutylaminofluorane, 2-p-chloroanilino-3-ethyl-6-N-ethyl-N-isoamylaminofluorane, 2-o-chloroanilino-6-p-butylanilinofluorane, 2-anilino-3-pentadecyl-6-diethylaminofluorane, 2-anilino-3-ethyl-6-dibutylaminofluorane, 2-o-toluidino-3-methyl-6-diisopropylaminofluorane, 2-anilino-3-methyl-6-N-isobutyl-N-ethylaminofluorane, 2-anilino-3-methyl-6-N-ethyl-N-tetrahydrofurfurylaminofluorane, 2-anilino-3-chloro-6-N-ethyl-N-isoamylaminofluorane, 2-anilino-3-methyl-6-N-methyl-N-[gamma]-ethoxypropylaminofluorane, 2-anilino-3-methyl-6-N-ethyl-N-[gamma]-ethoxypropylaminofluorane, and 2-anilino-3-methyl-6-N-ethyl-N-[gamma]-propoxypropylaminofluorane.

These basic dye precursors may be used singly or in combination of two or more kinds. The type of the basic dye precursor can be properly selected depending on the support, strength of the laser irradiation and solubility in solvent and the like.

### (color-forming component B)

Examples of the electron-accepting compound which reacts with the basic dye precursor include acidic compounds such as phenol compounds, organic acids or metal salts thereof, and oxybenzoic acid esters. Compounds described in JP-A No.61-291183, U.S.Pat.No.4771034.

More specific examples thereof include bisphenol compounds such as 2,2-bis(4'-hydroxyphenyl)propane [common name: bisphenol A], 2,2-bis(4'-hydroxyphenyl)pentane, 2,2-bis(4'-hydroxy-3',5'-dichlorophenyl)propane, 1,1-bis(4'-hydroxyphenyl)cyclohexane, 2,2-bis(4'-hydroxyphenyl)hexane, 1,1-bis(4'-hydroxyphenyl)propane, 1,1-bis(4'-hydroxyphenyl)butane, 1,1-bis(4'-hydroxyphenyl)pentane, 1,1-bis(4'-hydroxyphenyl)hexane, 1,1-bis(4'-hydroxyphenyl)heptane, 1,1-bis(4'-hydroxyphenyl)octane, 1,1-bis(4'-hydroxyphenyl)-2-methyl-pentane, 1,1-bis(4'-hydroxyphenyl)-2-ethyl-hexane, 1,1-bis(4'-hydroxyphenyl)dodecane, 1,4-bis(p-hydroxyphenylcumyl)benzene, 1,3-bis(p-hydroxyphenylcumyl)benzene, bis(p-hydroxyphenyl)sulfone, bis(3-allyl-4-hydroxyphenyl)sulfone, and bis(p-hydroxyphenyl)benzyl acetate ester; salicylic acid derivatives such as 3,5-di([alpha]-methylbenzyl)salicylic acid, 3,5-di(tert-butyl)salicylic acid, 3-[alpha]-[alpha]-dimethylbenzyl salicylic acid, and 4-([beta]-p-methoxyphenoxyethoxy)salicylic acid, 4-pentadecylsalicylic acid, 3,5-di(tert-octyl)salicylic acid, 5-octadecylsalicylic acid, 5-[alpha]-(p-[alpha]-methylbenzylphenyl)ethylsalicylic acid, 3-[alpha]-methylbenzyl-5-tert-octylsalicylic acid, 5-tetradecylsalicylic acid, 4-hexyloxysalicylic acid, 4-cyclohexyloxysalicylic acid, 4-decyloxysalicylic acid, 4-dodecyloxysalicylic acid, 4-pentadecyloxysalicylic acid, 4-octadecyloxysalicylic acid, 4-(n-pentanoylamino)salicylic acid, 4-(n-hexanoylamino)salicylic acid, 4-(n-octanoylamino)salicylic acid, 4-(hexadecanoylamino)salicylic acid, 4-(N'-n-butylcarbamoylamino)salicylic acid, 4-(N'-n-hexylcarbamoylamino)salicylic acid, 4-(N'-n-octylcarbamoylamino)salicylic acid, 4-(N'-hexadecylcarbamoylamino)salicylic acid, 4-(n-octyloxycarbonylamino)salicylic acid, 4-(n-nonyloxycarbonylamino)salicylic acid, 4-(n-decyloxycarbonylamino)salicylic acid, 4-(n-undecyloxycarbonylamino)salicylic acid, 4-(n-dodecyloxycarbonylamino)salicylic acid, 4-(n-tridecyloxycarbonylamino)salicylic acid, 4-(n-tetradecyloxycarbonylamino)salicylic acid, 4-(n-pentadecyloxycarbonylamino)salicylic acid, 4-(n-hexadecylcarbonylamino)salicylic acid, 4-(n-octadecyloxycarbonylamino)salicylic acid, 3-(n-octyloxycarbonylamino)salicylic acid, 3-(n-nonyloxycarbonylamino)salicylic acid, 3-(n-decyloxycarbonylamino)salicylic acid, 3-(n-undecyloxycarbonylamino)salicylic acid, 3-(n-dodecyloxycarbonylamino)salicylic acid, 3-(n-tridecyloxycarbonylamino)salicylic acid, 3-(n-tetradecyloxycarbonylamino)salicylic acid, 3-(n-pentadecyloxyloxycarbonylamino)salicylic acid, 3-(n-hexadecyloxycarbonylamino)salicylic acid, 3-(n-octadecyloxycarbonylamino)salicylic acid, 5-(n-octyloxycarbonylamino)salicylic acid, 5-(n-nonyloxycarbonylamino)salicylic acid, 5-(n-decyloxycarbonylamino)salicylic acid, 5-(n-undecyloxycarbonylamino)salicylic acid, 5-(n-dodecyloxycarbonylamino)salicylic acid, 5-(n-tridecyloxycarbonylamino)salicylic acid, 5-(n-tetradecyloxycarbonylamino)salicylic acid, 5-(n-pentadecyloxycarbonylamino)salicylic acid, 5-(n-hexadecyloxycarbonylamino)salicylic acid, and 5-(n-octadecyloxycarbonylamino)salicylic acid, preferably, salicylic acid derivatives such as 3,5-di([alpha]-methylbenzyl)salicylic acid, 3,5-di(tert-butyl)salicylic acid, and 4-([beta]-p-methoxyphenoxyethoxy)salicylic acid;

polyvalent metal salts of the salicylic acid derivatives include zinc, aluminum, calcium, copper or lead salts of the above salicylic acid derivatives, preferably, zinc and aluminum salts of the above salicylic acid derivatives;

oxybenzoic acid esters such as benzyl p-hydroxybenzoate, 2-ethylhexyl p-hydroxybenzoate, and [beta]-resorcylic acid-(2-phenoxyethyl)ester; and

phenols such as p-phenylphenol, 3,5-diphenylphenol, cumylphenol, 4-hydroxy-4'-isopropoxy-diphenylsulfone, and 4-hydroxy-4'-phenoxy-diphenylsulfone.

The bisphenol compounds and polyvalent zinc salts of the salicylic acid derivatives are particularly preferable since they give a satisfactory color forming property.

A single electron-accepting compound may be used or multiple electron-accepting compounds may be simultaneously used.

### (Microcapsules)

The process for producing the microcapsule will be described in detail hereinafter.

The interfacial polymerization method, the internal polymerization method, and the external polymerization method are known as methods for producing microcapsules. Any one thereof may be employed.

As described above, the coating composition of this invention contains microcapsules encapsulating at least one basic dye precursor. It is particularly preferable to employ the interfacial polymerization method which includes the step of mixing an oil phase prepared by dissolving or dispersing the basic dye precursor, which will be the core of the capsules, in a hydrophobic organic solvent with a water phase including a dissolved water-soluble polymer, the step of emulsifying the mixture by means of a homogenizer or the like, and the step of heating the emulsion to cause a polymer forming reaction at the interface between the oil droplets and water, thereby forming microcapsule walls made of a polymer material.

The wall materials for making the polymer material are added to the inside and/or the outside of the oil droplets. Specific examples of the polymer material include polyurethane, polyurea, polyamide, polyester, polycarbonate, ureaformaldehyde resin, melamine resin, polystyrene, and styrene-methacrylate copolymer, styrene-acrylate copolymer. Among these polymers, polyurethane, polyurea, polyamide, polyester, and polycarbonate are preferable. Polyurethane and polyurea are more preferable.

For example, if polyurea is used for the material of the capsule walls, the microcapsule walls can easily be formed by allowing a polyisocyanate such as a diisocyanate, triisocyanate, tetraisocyanate or polyisocyanate prepolymer to react with a polyamine such as a diamine, triamine or tetraamine, a prepolymer having 2 or more amino groups, piperazine or a derivative thereof, or a polyol in the above-mentioned water phase by the interfacial polymerization method.

For example, composite walls composed of polyurea and polyamide, or composite walls composed of polyurethane and polyamide can be prepared by incorporating polyisocyanate and a second material which reacts with the polyisocyanate to form capsule walls (for example, acid chloride, polyamine or polyol) into an aqueous solution (water phase) of a water-soluble polymer or an oil medium (oil phase) to be encapsulated, emulsifying the mixture, and heating the resultant emulsion. Details of this method of producing the composite walls made of polyurea and polyamide are described in JP-A No. 58-66948.

In the embodiment of the present invention, the capsule wall material preferably contains at least one isophorone diisocyanate compound. By forming the microcapsule by using a wall material containing an isophorone diisocyanate compound, the capsule wall is made hydrophobic, water adsorption at high humidity is decreased, and water desorption at low humidity is decreased, whereby the ambient humidity dependence of the thermal response of the microcapsule is decreased. As a result, the ambient humidity dependence of the sensitivity of the recording material is decreased.

As mentioned above, the capsule wall material preferably contains at least one isophorone diisocyanate compound. The wall material preferably contains an isophorone diisocyanate compound as a main component (the content in the wall material being 50% by mass or more), and the content of a material derived from isophorone diisocyanate is preferably 50% by mass or more.

The isophorone diisocyanate compound may be either monomer or multimer of isophorone diisocyanate, and trimer is particularly preferred. A mixture of dimer and trimer of isophorone diisocyanate is also preferably used as a wall material, and the rate of trimer is preferably 20% by mass or more and more preferably 50% by mass or more in the total weight of the capsule wall material.

In a range not impeding the effect of decreasing the ambient humidity dependence of the sensitivity of the recording material, in addition to the isophorone diisocyanate compound, other monomers or prepolymers may be used, whereby various highly hydrophobic microcapsules may be formed. It is preferable that, as the other monomers or prepolymers, a polyamine, a prepolymer having two or more amino groups, piperazine or its derivative, or a polyol may be used in combination with the above-mentioned isophorone diisocyanate monomer and/or multimer to form microcapsules of a polyurea or polyurethane.

In a range not impeding the effect of decreasing the ambient humidity dependence of the sensitivity of the recording material, in addition to the isophorone diisocyanate compound, other polyisocyanate compounds may be used. Other polyisocyanate compounds are preferably compounds having three or more isocyanate groups. However, a compound having three or more isocyanate group may be used in combination with a compound having two isocyanate groups, or a compound having two isocyanate groups may be used alone. Specific examples include xylene diisocyanate and a hydrate thereof, hexamethylene diisocyanate, trilene diisocyanate and a hydrate thereof; a dimer or trimer (biuret or isocyanurate) of a diisocyanate such as isophorone diisocyanate; a multifunctional adduct of a polyol such as trimethylol propane and a difunctional isocyanate such as xylene diisocyanate; a compound prepared by introducing a high molecular compound such as polyether having an active hydrogen such as polyethylene oxide into an adduct of a polyol such as trimethylol propane and a difunctional isocyanate such as xylene diisocyanate; and a formalin condensate of benzene isocyanate.

Other preferred examples include compounds disclosed in JP-A Nos. 62-212190, 4-26189 and 5-317694, and Japanese Patent Application No. 8-268721.

The isophorone diisocyanate compound is preferably added such that the average particle diameter of the microcapsules is from 0.1 to 12 um and the thickness of the capsule walls is from 0.01 to 3 um. The size of the dispersed particle is generally from about 0.2 to 10 um.

Specific examples of the polyol and/or the polyamine, which is added to the water phase and/or the oil phase as one of the components that react with a polyisocyanate to form a microcapsule wall, include propylene glycol, glycerin, trimethylolpropane, triethanolamine, sorbitol,
diaminobutane, 2,2'-(ethylenedioxy)bis(ethylamine), and hexamethylenediamine, tetraethylenepentamine. When a polyol is added thereto, polyurethane walls are formed. In the above-mentioned reaction, it is preferable to keep the reaction temperature high or add an appropriate polymerization catalyst in order to increase the reaction velocity.

The polyisocyanate, the polyol, the reaction catalyst, the polyamine for forming a part of capsule walls, and the like are described in detail in Polyurethane Handbook, edited by Keiji Iwata and published by the Nikkan Kogyo Shimbun, Ltd. (1987).

If necessary, a charge adjusting agent such as a metal-containing dye or nigrosin, or any other additive may be added to the microcapsule walls. These additives can be added at the time of forming the walls, or at any other time, to be incorporated in the walls of the capsules. If necessary, a monomer such as a vinyl monomer may be graft-polymerized in order to adjust the charging property of the surfaces of the capsule walls.

In order to fabricate microcapsule walls having excellent substance-permeability and color-formability even at a lower temperature, it is preferable to use a plasticizer suitable for the polymer used as the wall material. The plasticizer preferably has a melting point from about 50°C to about 120°C. It is particularly preferable to select a plasticizer which has such a melting point and takes a solid form at ordinary temperature.

For example, when the wall material is polyurea or polyurethane, it is preferable to use a hydroxy compound, a carbamic acid ester compound, an aromatic alkoxy compound, an organic sulfonamide compound, an aliphatic amide compound, an arylamide compound or the like, as a plasticizer.

In order to suppress change in color by being exposed to light, it is preferable to include the ultraviolet ray absorber (UV absorber) into the microcapsule.

The UV absorber which is used in the embodiment of the present invention may be any UV absorber that is substantially colorless, but not limited thereto. The UV absorber may have a nature of absorbing the incident UV radiation and dissipating the associated energy in a harmless manner such as transformation into longer wavelength.

Preferable examples of the UV absorber include benzophenone ultraviolet ray absorbers, benzotriazole ultraviolet ray absorbers, salicylic acid ultraviolet ray absorbers, cyanoacrylate ultraviolet ray absorbers, and oxalic acid anilide ultraviolet ray absorbers. A particularly preferable example is benzotriazole ultraviolet ray absorbers.

Examples thereof are described in JP-A Nos. 47-10537, 58-111942, 58-212844, 59-19945, 59-46646, 59-109055 and 63-53544, Japanese Patent Application Publication (JP-B) Nos. 36-10466, 42-26187, 48-30492, 48-31255, 48-41572, 48-54965 and 50-10726, and U.S. Pat. Nos. 2,719,086, 3,707,375, 3,754,919 and 4,220,711.

When the oil phase is prepared, it is preferable to use an organic solvent having a boiling point of from 30 to about 300°C in which the basic dye precursor or the photolytic diazo compound is dissolved for forming cores of microcapsules.

Specific examples thereof include esters, dimethylnaphthalene, diethylnaphthalene, diisopropylnaphthalene, dimethylbiphenyl, diisopropylbiphenyl, diisobutylbiphenyl, 1-methyl-1-dimethylphenyl-2-phenylmethane, 1-ethyl-1-dimethylphenyl-1-phenylmethane, 1-propyl-1-dimethylphenyl-1-phenylmethane, triallylmethane (such as tritoluylmethane and toluyldiphenylmethane), terphenyl compounds (such as terphenyl), alkyl compounds, hydrogenated terphenyl compounds (such as hexahydroterphenyl), alkylated diphenyl ether compounds (such as propyldiphenyl ether), and diphenyl ether, and tetrahydrofuran, dioxolane, dioxane, methylene chloride.

Among these examples, esters are particularly preferable from the viewpoints of the emulsification stability of the emulsion.

Examples of the esters include phosphate esters such as triphenyl phosphate, tricresyl phosphate, butyl phosphate, octyl phosphate and cresylphenyl phosphate; phthalic esters such as dibutyl phthalate, 2-ethylhexyl phthalate, ethyl phthalate, octyl phthalate, and butylbenzyl phthalate; dioctyl tetrahydrophthalate;
benzoic esters such as ethyl benzoate, propyl benzoate, butyl benzoate, isopentyl benzoate, and benzyl benzoate;
abietic esters such as ethyl abietate, and benzyl abietate;
dioctyl adipate;
isodecyl succinate;
diocyl azelate;
oxalic esters such as dibutyl oxalate and dipentyl oxalate;
diethyl malonate;
maleic esters such as dimethyl maleate, diethyl maleate, and dibutyl maleate; tributyl citrate;
sorbic esters such as methyl sorbate, ethyl sorbate and butyl sorbate;
sebacic esters such as dibutyl sebacate, and dioctyl sebacate;
ethylene glycol esters such as formic monoester and diester, butyric monoester and diester, lauric monoester and diester, palmitic monoester and diester, stearic monoester and diester, and oleic monoester and diester;
triacetin;
diethyl carbonate;
diphenyl carbonate;
ethylene carbonate;
propylene carbonate;
formic esters such as methyl formate, ethyl formate, butyl formate;
acetic esters such as methyl acetate, ethyl acetate, butyl acetate, isopropyl acetate; acetoacetic esters such as acetoacetic acid esters having 4 to 7 carbon atoms;
boric esters such as tributyl borate and tripentyl borate.

Among them, it is preferable to use, as the organic solvent,
tricresyl phosphate alone or in combination with other solvent(s), or
ethyl acetate alone or in combination with other solvent(s), or
butyl acetate alone or in combination with other solvent(s)
since the stability of the emulsion becomes most satisfactory. The above-mentioned organic solvents may be used in any combination thereof, or the organic solvent(s) may be used together with an organic solvent other than the above-mentioned organic solvents.

In order to obtain a high mark density with a small coating composition amount, as described in JP-A No. 4-101885, only a low boiling point solvent may be used as a solvent for forming microcapsules. In this case, the above-mentioned low boiling point solvent such as
ethyl acetate alone or in combination with other solvent(s), or
butyl acetate alone or in combination with other solvent(s)
may be suitably used.

When the basic dye precursor compound is included in the coating composition for recording material, the content of the basic dye precursor is preferably from 1 to 20%w/w of the coating composition , more preferably from 2 to 10%w/w.

When UV absorber is included in the coating composition for recording material, the content of the UV absorber is preferably from 0.2 to 20%w/w of the coating composition , more preferably from 0.5 to 10 %w/w.

The water phase may be an aqueous solution composed of a dissolved water-soluble polymer as a protective colloid. The above-mentioned oil phase is added to the water phase, and then the mixture is emulsified with a homogenizer or the like. The water-soluble polymer acts as a dispersing medium for achieving homogeneous dispersion easily and stabilizing the emulsified solution. A surfactant may be added to at least one of the oil phase and the water phase in order to achieve more homogenous and stable dispersion. As the surfactant, a well-known surfactant for emulsification can be used. The amount of the surfactant to be added is preferably from 0.1 to 5%, more preferably from 0.5 to 2% by mass of the amount of the oil phase.

As the surfactant added to the water phase, a surfactant which does not cause precipitation or aggregation caused by a reaction with the protective colloid is appropriately selected from anionic and nonionic surfactants.

Preferable examples of the surfactant include sodium alkylbenzenesulfonate, sodium alkylsulfate, sodium dioctyl sulfosuccinate, polyalkylene glycol (such as polyoxyethylene nonyl phenyl ether), acetylene glycol and the like.

The oil phase containing the above-mentioned components and the water phase containing the protective colloid and the surfactant can be emulsified by a known ordinary means for emulsifying fine particles, such as high-speed stirring means or ultrasonic wave dispersing means. Specific examples of the means include a homogenizer, a Manton-Gaulin, an ultrasonic wave disperser, a dissolver, or a Kdmill. In order to promote the reaction for forming capsule walls after the emulsification, it is preferable to heat the emulsion to a temperature of from about 30°C to about 70°C. In order to prevent the aggregation between the capsules during the reaction, it is preferable to add water to the reaction system so as to lower the probability of collision between the capsules, or perform stirring sufficiently.

During the capsule forming reaction, a dispersion agent for preventing aggregation may be newly added. With the advance of the polymerization reaction, generation of carbon dioxide is observed. The termination of the generation can be regarded as the end point of the capsule wall forming reaction. Usually, target microcapsules can be obtained by several hours reaction.

### (Emulsion)

When the basic dye precursor is used as core materials to form microcapsules, the basic dye precursor can be solid-dispersed together with, for example, a water-soluble polymer, an organic base, and other color-forming auxiliary/auxiliaries, by means of a sand mill or the like before use. However, it is preferable to dissolve the basic dye precursor in a organic solvent, then mix this solution with an aqueous polymer solution (water phase) containing, as a protective colloid, a surfactant and/or a water-soluble polymer, then emulsify the resultant mixture by means of a homogenizer or the like, then use the resulting emulsion. In this case, a low boiling point solvent may be used as a dissolving auxiliary and may be evaporated the low boiling point solvent after emulsification.

The average size of the emulsified particle is preferably 10 um or less.

The organic solvent used in this case can be appropriately selected from the high boiling point oils described in JP-A No. 2-141279 or the low boiling point solvent such as methyl acetate, ethyl acetate, butyl acetate, isopropyl acetate, methyl formate, ethyl formate, butyl formate, tetrahydrofuran, dioxolane, dioxane, acetoacetic acid esters having 4 to 7 carbon atoms.

Among the organic solvent, it is preferable to use esters from the viewpoint of the emulsification stability of the resultant emulsion. Among the esters, tricresyl phosphate, ethyl acetate, butyl acetate are particularly preferable. The above organic solvent may be used in any combination thereof, or the organic solvent(s) may be used simultaneously with an organic solvent other than the above organic solvents.

The water-soluble polymer contained as the protective colloid can be appropriately selected from known anionic polymers, nonionic polymers and amphoteric polymers. The water-soluble polymer has solubility in water of preferably 5% or more at a temperature at which the emulsification is conducted. Specific examples of the water-soluble polymer include: polyvinyl alcohol and modified products thereof, polyacrylic amide and derivatives thereof, ethylene-vinyl acetate copolymer; styrene-maleic anhydride copolymer; ethylene-maleic anhydride copolymer; isobutylene-maleic anhydride copolymer; polyvinyl pyrrolidone; ethylene-acrylic acid copolymer; vinyl acetate-acrylic acid copolymer; cellulose derivatives such as carboxymethylcellulose and methylcellulose; casein; gelatin; starch derivatives; gum arabic; and sodium alginate.

Among these polymers, polyvinyl alcohol and its derivatives are preferable.

The mixing ratio of the oil phase to the water phase (the mass of the oil phase/the mass of the water phase) is preferably from 0.1 to 1.5, more preferably from 0.4 to 1.2.

When the mixing ratio is within the range of 0.1 to 1.5, the aqueous coating composition has an appropriate viscosity, and an appropriate amount of basic dye precursor.Thus the stability of the aqueous coating composition with time is superior and better optical density of a mark formed by laser irradiation could be obtained.

When the electron-accepting compound is included in the coating composition that is used in the embodiment of the present invention, the amount of the electron-accepting compound is preferably from 0.5 to 30 parts by mass, more preferably from 1.0 to 10 parts by mass based on 1 part by mass of the basic dye precursor.

### ((Water))

According to the embodiment of the present invention, water can be used as a solvent. Although the amount of water is not specifically limited, usually the range is within 10 to 80% by weight and preferably 30 to 70% by weight.

### ((Other Components))

Other components that can be used in the coating composition will be described hereinafter.

Such other components can be appropriately selected, without particular limitation, in accordance with the specific purpose of the coating.

Examples thereof include additives known in the art, such as a thermally-meltable material, an UV absorber, a dispersion stabilizer, surfactant, an additive for anti-scratching, a pigment to enhance contrast between the color of a mark formed by laser irradiation and the color of unmark, and an antioxidant.

The amount of each of such other components to be applied is preferably from about 0.01 to 20% w/w of the coating composition, more preferably from about 0.05 to 10% w/w of the coating composition.

The thermally-meltable material can be included in the recording layer in order to improve the thermal responsiveness thereof.

Examples of the thermally-meltable material include an aromatic ether, a thioether, an ester, an aliphatic amide and an ureido. As examples, these compounds are described in JP-A Nos. 58-57989, 58-87094, 61-58789, 62-109681, 62-132674, 63-151478, 63-235961, 2-184489 and 2-215585.

Preferable examples of the ultraviolet ray absorber include benzophenone ultraviolet ray absorbers, benzotriazole ultraviolet ray absorbers, salicylic acid ultraviolet ray absorbers, cyanoacrylate ultraviolet ray absorbers, and oxalic acid anilide ultraviolet ray absorbers. Examples thereof are described in JP-A Nos. 47-10537, 58-111942, 58-212844, 59-19945, 59-46646, 59-109055 and 63-53544, Japanese Patent Application Publication (JP-B) Nos. 36-10466, 42-26187, 48-30492, 48-31255, 48-41572, 48-54965 and 50-10726, and U.S. Pat. Nos. 2,719,086, 3,707,375, 3,754,919 and 4,220,711.

Examples of the dispersion stabilizer include organic salt, inorganic salt, and/or water soluble polymer. Thereof are described in, for example, JP-B Nos. 3556484, 3986110, 4107693, 4861678, 4524129, 4659403.

The surfactant can be included in the recording layer in order to adjust the surface tension of the coating composition.

Examples of surfactants include anionic surfactants, nonionic surfactants, and acetylene glycol surfactants. They may be used alone or as a mixture of two or more. Examples thereof are described in JP-B Nos. 3508287, 4063482, 4900764, and U.S. Pat. Nos.3291580, 5156675, 5183502, 5196056, 5798776, 6482256

The additive for anti-scratching can be included in the recording layer in order to reduce formation of unfavorable pressure marks by scratching.

Examples of the additive for anti-scratching include a plastic wax dispersion. As examples, these compounds are described in Application No.:13/353,095.

Preferable examples of the pigment include the pigment for white color. Examples thereof are described in JP-A Nos. 2011-252169, 2010-539306 and U.S. Pat. 2008-066649, 8,034,864.

Examples of the antioxidant include hindered amine antioxidants, hindered phenol antioxidants, aniline antioxidants, and quinoline antioxidants. Antioxidants thereof are described in, for example, JP-A Nos. 59-155090, 60-107383, 60-107384, 61-137770, 61-139481 and 61-160287.

It is preferable that the recording layer is applied such that a solid application amount thereof after application and drying will be from 0.5 to 25 g/ m² and the thickness of the recording layer will be 0.5 to 25 um. A plurality of such recording layers may be provided. In this case, the solid application amount of all the recording layers is preferably from 0.5 to 25 g/m².

### <Chemical Coating Composition for Forming Recording Layer>

The coating composition for forming the recording layer can be prepared, for example, by mixing the microcapsule solution and/or the emulsion prepared as described in the previous paragraph, and water soluble polymer and plastic dispersion and other components laid out in the present invention as necessary.

The addition sequence could be decided on a case-by-case basis.

If the viscosity of the coating composition is greater than 320mPa·s at 25°C, it would be difficult for the coating composition to be pumped into the ink supply in the printing plant.

The viscosity of the coating composition is from about 10mPa • s to 300mPa • s at 25°C, preferably from about 50mPa • s to 200mPa • s at 25°C.

### <Protective Layer>

The recording material can have a protective layer as an uppermost layer at the recording layer side of the material. Usually, the protective layer is formed by applying a liquid chemical coating composition for the protective layer. Such a composition is described in, for example, JP-A 2007-152686A.

However the recording material that is used in the invention has preferably no protective layer applied on the recording layer. The removal of a protective layer on the recording layer can increase optical density of the mark formed by the laser irradiation.

### <Support>

Usually, any kind of support can be used. These are described in, for example JP-A 2007-152686A, JP-B Nos.3656693(described as 'paper board').

### <Other Layers>

In the embodiment of the present invention, for the purpose of preventing fading of the image, an ultraviolet ray filter layer may be provided at any position on the support. The ultraviolet ray filter layer contains an ultraviolet ray absorber compound such as benzotriazole compounds, benzophenone compounds, and hindered amine compounds.

Further, an antireflection layer may be provided. The antireflection layer can be formed by a mixture containing particles that are usable in the back layer as a preferable matting agent.

In order to prevent the peeling of the recording layer from the support, an undercoat layer may be provided on the support before the recording layer and the like are provided on the support.

The undercoat layer may include at least one compound selected from acrylic ester copolymers, polyvinylidene chloride, SBR, aqueous polyesters and the like. The thickness thereof is preferably from 0.05 to 0.5 um.

When the recording layer is applied on the undercoat layer, the undercoat layer may swell by water contained in the coating composition solution for forming the recording layer so that the image recorded in the recording layer may deteriorate. It is therefore preferable to use a hardening agent such as a dialdehyde (such as glutaraldehyde or 2,3-dihydroxy-1,4-dioxane) or boric acid to harden the layer. The amount of the hardening agent to be added may be appropriately determined within the range of 0.2 to 3.0% by mass based on the dry mass of the undercoat layer in accordance with a desired hardness.

The recording material used in the invention may be manufactured, for example, in the following procedure, but the method is not limited thereto. At one side of a support, a liquid coating composition for forming a recording layer (hereinafter referred to as a "recording layer coating liquid") is applied to form a recording layer using flexo printing machine, gravure printing machine, off set printing machine, roller coating machine, curtain coating machine, and other coating methods. It is preferably applied onto the support as an ink using flexo printing machine, gravure printing machine.

The recording method of the invention is a method of recording an image on the above-mentioned recording material by irradiating a laser. The wavelength of the CO2 laser to be irradiated is 9 to 11 um, preferably 9.2 to 10.6 um. By irradiating a CO2 laser having a wavelength of 9 to 11 um, an image of high printing density can be recorded.

The CO2 laser is not particularly limited, as far as a CO2 laser light having a wavelength of 9 to 11 um can be irradiated, and may be properly selected depending on the purpose, and a commercial laser can be used. Examples include BLAZAR 6000 manufactured by LaserTechnics, Inc., Unimark manufactured by Ushio Inc., Zymark 7000 manufactured by Coherent, Inc., ML-9110 manufactured by Keyence, Smart Rays 110 manufactured by EDM CORP., and Domino Scanning Laser manufactured by Cornes Dodwell.

The CO2 laser is preferably irradiated while adjusting such that the energy on the recording material surface is 10 to 200 mJ/mm². More preferably, the energy on the recording material surface is 10 to 150 mJ/mm². If the energy by the CO2 laser is less than 10 mJ/ mm², sufficient color-forming may not be achieved, or if exceeding 200 mJ/ mm², ablation may occur and the colored recording layer may be lost.

### Examples

The invention is specifically described below by presenting examples, but the invention is not limited to these examples alone. In the example, the unit "%" refers to "% by mass" unless otherwise specified.

### Example-1

### < Preparation of Liquid Coating Composition Containing Microcapsules>

6,0 g of 2-anilino-6-(N-ethyl-N-isobutylamino)-3-methylfluoran and 1.0g of 2-(2-hydroxy-5-methylpheyl) benzotriazole were added to 16.0 g of ethyl acetate, heated to about 70°C and dissolved, and cooled to 45°C. To this, 10.0 g of capsule wall material (Takenate D140N, manufactured by Takeda Pharmaceutical Co., Ltd.) was added and mixed. This solution was added to the water phase of 47.7g of 5% polyvinyl alcohol with carboxylic substitute (OTP-5, manufactured by Kuraray), and emulsified and dispersed for 5 minutes at 15,000 rpm by using an Ace Homogenizer (manufactured by Nippon Seiki Co., Ltd.). An encapsulating reaction was conducted for 4 hours at 60°C, whereby a liquid coating composition containing microcapsules having an average particle diameter of 0.8um was prepared.

### <Preparation of Recording Layer Liquid Coating Composition ->

A recording layer liquid coating composition was prepared by mixing 30.0 g of the liquid coating composition containing microcapsules, 60 g of electron accepting compound (USR-054, manufactured by SANKO Co. Ltd. / solid content concentration: 42.5%), 4.0 g of 20 % polyvinyl alcohol (Selvol840, 45-55mPa • s@4%-20°C,manufactured by Sekisui Specialty Chemicals), 2.0g of Blankophor FCD (manufactured by Blankophor GmH & Co.Kg).

### <Preparation of Recording Layer>

On one side of SBS paper board (manufactured by Leneta) having a thickness of 0.4 mm, the recording layer liquid coating composition was applied by Phantom Hand Proofer (manufactured by Harper Scientific) that is flexographic-type proofing systems incorporated ceramic anilox roller (anilox roller cell volume is 12 BCM), steel doctor blades and solvent resistant rubber rolls, and then dried, whereby a recording layer was formed on the support. At this time, the liquid coating composition temperature of each layer was adjusted in a range of 23°C to 27°C. The coating speed was 100 feet/min, the support was subsequently air-dried at a temperature of 45°C to 55°C.

### Example-2

### < Preparation of Liquid Coating Composition Containing Microcapsules>

Is prepared as the same as in Example-1.

### <Preparation of Recording Layer Liquid Coating Composition ->

A recording layer liquid coating composition was prepared by mixing 30.0 g of the liquid coating composition containing microcapsules, 60 g of electron accepting compound (USR-054, manufactured by SANKO Co. Ltd. / solid content concentration: 42.5%), 4.0 g of 20 % polyvinyl alcohol (PVA224 , 40-48mPa • s@4%-20°C,manufactured by Kuraray), 2.0g of 20% Tinopal SFP (manufactured by Ciba Specialty Chemicals).

### <Preparation of Recording Layer>

Is prepared as the same as in Example-1.

### Example-3

### < Preparation of Liquid Coating Composition Containing Microcapsules>

Is prepared as the same as in Example-1.

### <Preparation of Recording Layer Liquid Coating Composition ->

Is prepared as the same as in Example-1.

### <Preparation of Recording Layer>

On one side of SBS paper board (manufactured by Leneta) having a thickness of 0.4 mm, the recording layer liquid coating composition was applied by Phantom Hand Proofer (manufactured by Harper Scientific) that is flexographic-type proofing systems incorporated ceramic anilox roller (anilox roller cell volume is 12 BCM), steel doctor blades and solvent resistant rubber rolls, and then dried, whereby a recording layer was formed on the support. At this time, the liquid coating composition temperature of each layer was adjusted in a range of 23°C to 27°C. The coating speed was 100 feet/min, the support was subsequently air-dried at a temperature of 45°C to 55°C.

After drying, a water-based protective coat liquid of CK-43P-23L (manufactured by Cork Industries) was applied by the use of a Phantom Hand Proofer (manufactured by Harper Scientific) that is a flexographic-type proofing system which incorporates ceramic anilox roller (anilox roller cell volume is 8 BCM), steel doctor blades, and solvent-resistant rubber rollers, and then dried, whereby a recording layer was formed on the support. At this time, the liquid coating composition temperature of each layer was adjusted in a range of 23°C to 27°C. The coating speed was 100 feet/min, and the support was subsequently air-dried at a temperature of 45°C to 55°C.

### Example-4

### < Preparation of Liquid Coating Composition Containing Microcapsules>

Is prepared as the same as in Example-1.

### <Preparation of Recording Layer Liquid Coating Composition ->

A recording layer liquid coating composition was prepared by mixing 30.0 g of the liquid coating composition containing microcapsules, 60 g of electron accepting compound (USR-054, manufactured by SANKO Co. Ltd. / solid content concentration: 42.5%), 4.0 g of 20 % polyvinyl alcohol (Selvol840, 45-55mPa • s@4%-20°C,manufactured by Sekisui Specialty Chemicals), 2.0g of Blankophor FCD (manufactured by Blankophor GmH & Co.Kg), and 5.0 g of dispersion of combination of polyethylene wax and polytetrafluoroethylene (Microspersion 190-50, manufactured by MICRO POWDERS, Inc.).

### <Preparation of Recording Layer>

Is prepared as the same as in Example-1.

### Example-5

### < Preparation of Liquid Coating Composition Containing Microcapsules>

Is prepared as the same as in Example-1.

### <Preparation of Recording Layer Liquid Coating Composition >

Is prepared as the same as in Example-1.

### <Preparation of Recording Layer>

On one side of a white corrugated fiberboard support (manufactured by Rock Tenn) having a thickness of 3 mm, the recording layer liquid coating composition is applied by a Phantom Hand Proofer (manufactured by Harper Scientific) that is a flexographic-type proofing systems incorporating a ceramic anilox roller (anilox roller cell volume is 12 BCM), steel doctor blades, and solvent resistant rubber rolls, and then dried, whereby a recording layer was formed on the support. At this time, the temperature of each layer of the liquid coating composition was adjusted in a range of 23°C to 27°C. The coating speed was 100 feet/min, and the support was subsequently air-dried at a temperature of 45°C to 55°C.

### Comparative Example-1

### < Preparation of Liquid Coating Composition Containing Microcapsules>

Is prepared as the same as in Example-1.

### <Preparation of Recording Layer Liquid Coating Composition >

A recording layer liquid coating composition was prepared by mixing 30.0 g of the liquid coating composition containing microcapsules, 60 g of electron accepting compound (USR-054, manufactured by SANKO Co. Ltd. / solid content concentration: 42.5%), 4.0 g of 20 % polyvinyl alcohol (Mowiol 4-88 , 3.5-4.5mPa • s@4%-20°C,manufactured by Kuraray), 2.0g of Blankophor FCD (manufactured by Blankophor GmH & Co.Kg).

### <Preparation of Recording Layer>

Is prepared as the same as in Example-1.

### Comparative Example-2

### < Preparation of Liquid Coating Composition Containing Microcapsules>

Is prepared as the same as in Example-1.

### <Preparation of Recording Layer Liquid Coating Composition >

A recording layer liquid coating composition was prepared by mixing 30.0 g of the liquid coating composition containing microcapsules, 60 g of electron accepting compound (USR-054, manufactured by SANKO Co. Ltd. / solid content concentration: 42.5%), 4.0 g of 20 % polyvinyl alcohol (PVA224 , 40-48mPa • s@4%-20°C,manufactured by Kuraray).

### <Preparation of Recording Layer>

Is prepared as the same as in Example-1.

### Comparative Example-3

### < Preparation of Liquid Coating Composition Containing Microcapsules>

Is prepared as the same as in Example-1.

### <Preparation of Recording Layer Liquid Coating Composition >

Is prepared as the same as in Comparative Example-1.

### <Preparation of Recording Layer>

Is prepared as the same as in Example-5.

### Evaluation-1 (Viscoelastic Characteristics of coating composition)

In Examples 1,2 and Comparative Examples 1,2, the viscoelastic characteristics of each coating composition obtained were measured using the TA Instruments Model AR-G2 rheometer. A setting of [Flat Plate SST 25mm smart swap-500µgap] was used for the sensor system and the measurement temperature was 25[deg.] C.

The viscosity was measured continuously using the rheometer while changing shear rate. After holding for 30 seconds at a shear rate of 100 (1/s), the coating composition was allowed to stand undisturbed for 60 seconds. Next, the viscosity was measured by continuously increasing the shear rate from 1.0X10⁻³ (1/s) to 5000 (1/s) over the course of 15 minutes, and then after allowing to stand for 40 seconds at a shear rate of 5000 (1/s) the viscosity was again measured by continuously decreasing the shear stress from 5000 (1/s) to 1.0X10⁻³ (1/s) over the course of 15 minutes.

In order to compare the viscoelastic characteristics of each coating composition obtained in Examples 1,2 and Comperative Examples 1,2,
the viscosities of the resulting coating composition at shear rates of 5000 (1/s) is shown in Table 1. In addition, the thixotropic index values (TI values) were calculated from the results obtained and also shown in Table 1.
Furthermore, in Table 1, the "viscosity at a shear rate of 5000 (1/s)" is abbreviated as the "viscosity at 5000 (1/s)".

### Evaluation-2 (Optical density)

In Examples 1 to 5 and Comperative Examples 1 to 3, laser image recording was performed on the recording material in the shape of filled square (1cmX1cm). The condition of irradiation was as follows.
The laser beams used in the Example was Carbon dioxide (CO₂) laser "VideoJet 3120" manufactured by Videojet Technologies Inc.
Laser power: 10 W
Intensity: 8 %
Speed: 4000 mm/sec
Circumferential temperature and humidity condition: 20[deg.] C / 27 %

The reflection optical density of the recording material was obtained by measuring the image by irradiation of a laser beam with a densitometer (X-rite 310, manufactured by X-rite Co.).
The measuring of the reflection optical density was carried out three times in the same square, and the average value for the obtained number was assumed to be the density of the square.
The results of the evaluation are shown in Table 2.

### Evaluation-3 (Coating defect)

The evaluation for coating defect was conducted by checking barcode defect which was marked by irradiation of a laser beam on the recording material. And the barcode was evaluated by using a barcode verifier, which will be described later.

Barcode recording was performed on the recording material. The condition of irradiation was as follows.

The laser beams used in the Example was Carbon dioxide (CO₂) laser "VideoJet 3120" manufactured by Videojet. Technologies Inc.
Laser power: 10 W
Intensity: 17%
Speed: 1020 mm/sec
Circumferential temperature and humidity condition: 19 [deg.] C / 41%

As the barcode verifier (barcode readability evaluating device) for evaluating the barcode readability of a barcode,
Integra9510 manufactured by Label Vision Systems, Inc. was used.

For Inventive Examples 1 to 5 and Comparative Examples 1 to 3, the aforementioned evaluating device was used to measure the defects(unit; %).
Defects is one of the American National Standards Institute (ANSI)/ISO quality parameters, and defined as follows.
"The worst case change in darkness within a single bar or space. The largest difference in reflectivity found in a single bar or space is measured as a percentage of the Symbol Contrast."

The results of the evaluation are shown in Table 2.

**Table 1.**

| | Comparative-Example 1 | Comparative-Example 2 | Example-1 | Example-2 |
|---|---|---|---|---|
| Visocosity of PVA (4% aqueous solution) | 3.9 mPa·s | 43 mPa·s | 51 mPa·s | 43 mPa·s |
| Water soluble compound | Blankophor FCD | none | Blankophor FCD | Tinopal SFP |
| Viscosity at 5000(1/s) (mPa·s) | 58 | 68 | 108 | 105 |
| TI value | 50 | 62 | 160 | 151 |
| Note | Comparative | Comparative | Invention | Invention |

**Table 2.**

| | Comparati ve-Example 1 | Comparati ve-Example 2 | Comparat ive-Example 3 | Examp le -1 | Examp le -2 | Examp le -3 | Examp le -4 | Examp le -5 |
|---|---|---|---|---|---|---|---|---|
| Support | SBS paper board | SBS paper board | Corrugate d fiberboard | SBS paper board | SBS paper board | SBS paper board | SBS paper board | Corrugat ed fiberboar d |
| Protective layer | none | none | none | none | none | Applie d | none | none |
| Wax Dispersion | none | none | none | none | none | none | Include d | none |
| Reflection optical density | 0.78 | 0.92 | 0.80 | 1.17 | 1.15 | 1.12 | 1.10 | 1.01 |
| Defects | 20% | 17% | 15% | 8% | 9% | 8% | 9% | 9% |
| Note | Comparativ e | Comparativ e | Comparati ve | Inventio n | Inventio n | Inventio n | Inventio n | Inventio n |

As is clear from Table 2, the optical density of a mark formed by laser irradiation is higher, the coating defect on substrate is improved in Examples 1 to 5 compared with Comparative Examples 1 to 3.

## Claims

1. A chemical coating composition for a recording material to record an image by irradiation of a laser beam, the chemical coating composition comprising:
a water soluble polymer comprising polyvinyl alcohol and modified products of polyvinyl alcohol, wherein, when a 4% aqueous solution of the water soluble polymer is at 20°C, the 4% aqueous solution has a viscosity in a range of 35 mPa·s to 110 mPa·s, wherein a component ratio of the water soluble polymer is in a range of 0.1% w/w of the chemical coating composition to 3% w/w of the chemical coating composition;
at least one water soluble compound which has at least one acidic group and at least one basic group, and has absorption maximum at more than 330nm in aqueous solution, wherein a component ratio of the water soluble compound is in a range of 0.01% w/w of the chemical coating composition to 5% w/w of the chemical coating composition;
a plurality of microcapsules, each of the plurality of microcapsules encapsulating a basic dye precursor; and
an electron acceptor compound external to each of the plurality of microcapsules,
wherein, when the chemical coating composition is at 25°C, a viscosity of the chemical coating composition is within a range of 10 mPa·s to 300 mPa·s.

2. A chemical coating composition according to claim 1, wherein the water soluble compound has a molecular weight in the range of 200 to 5,000 atomic mass units.

3. A chemical coating composition according to claim 1, wherein the acidic groups of the water soluble compound are partially or completely neutralized.

4. A method of recording an image, comprising: irradiating a CO₂ laser having a wavelength in the range of 9 µm to 11 µm onto a recording material, wherein the recording layer comprises:
a water soluble polymer comprising polyvinyl alcohol and modified products of polyvinyl alcohol, wherein, when a 4% aqueous solution of the water soluble polymer is at 20 °C, the 4% aqueous solution has a viscosity in a range of 35 mPa·s to 110 mPa·s, wherein a component ratio of the water soluble polymer is in a range of 0.1% w/w of the chemical coating composition to 3% w/w of the chemical coating composition;
at least one water soluble compound which has at least one acidic group and at least one basic group, and has absorption maximum at more than 330nm in aqueous solution, wherein a component ratio of the at least one water soluble compound is in a range of 0.01% w/w of the chemical coating composition to 5% w/w of the chemical coating composition;
a plurality of microcapsules, each of the plurality of microcapsules encapsulating a basic dye precursor; and
an electron acceptor compound external to each of the plurality of microcapsules, wherein, when the chemical coating composition is at 25°C, a viscosity of the chemical coating composition is within a range of 10 mPa·s to 300 mPa·s.

## Patentansprüche

1. Chemische Beschichtungszusammensetzung für ein Aufzeichnungsmaterial zur Aufzeichnung eines Bildes durch Bestrahlung mit einem Laserstrahl, wobei die chemische Beschichtungszusammensetzung Folgendes umfasst:
ein wasserlösliches Polymer, das Polyvinylalkohol und modifizierte Produkte von Polyvinylalkohol umfasst, wobei, wenn eine 4%ige wässrige Lösung des wasserlöslichen Polymers bei 20°C vorliegt, die 4%ige wässrige Lösung eine Viskosität in einem Bereich von 35 mPa-s bis 110 mPa-s aufweist, wobei ein Komponentenverhältnis des wasserlöslichen Polymers in einem Bereich von 0,1% Gew./Gew. der chemischen Beschichtungszusammensetzung bis 3% Gew./Gew. der chemischen Beschichtungszusammensetzung liegt;
mindestens eine wasserlösliche Verbindung, die mindestens eine saure Gruppe und mindestens eine basische Gruppe aufweist, und ein Absorptionsmaximum bei mehr als 330 nm in wässriger Lösung aufweist, wobei ein Komponentenverhältnis der wasserlöslichen Verbindung in einem Bereich von 0,01 Gew.-% der chemischen Beschichtungszusammensetzung bis 5 Gew.-% der chemischen Beschichtungszusammensetzung liegt;
eine Vielzahl von Mikrokapseln, wobei die Vielzahl von Mikrokapseln jeweils einen basischen Farbstoffvorläufer verkapselt; und
eine Elektronenakzeptorverbindung jeweils außerhalb der Vielzahl von Mikrokapseln, wobei, wenn die chemische Beschichtungszusammensetzung bei 25 °C liegt, eine Viskosität der chemischen Beschichtungszusammensetzung in einem Bereich von 10 mPa-s bis 300 mPa-s liegt.

2. Chemische Beschichtungszusammensetzung nach Anspruch 1, wobei die wasserlösliche Verbindung ein Molekulargewicht im Bereich von 200 bis 5.000 Atommasseneinheiten aufweist.

3. Chemische Beschichtungszusammensetzung nach Anspruch 1, wobei die sauren Gruppen der wasserlöslichen Verbindung teilweise oder vollständig neutralisiert sind.

4. Verfahren zum Aufzeichnen eines Bildes, umfassend: Einstrahlen eines CO2-Lasers mit einer Wellenlänge im Bereich von 9 µm bis 11 µm auf ein Aufzeichnungsmaterial, wobei die Aufzeichnungsschicht umfasst:
ein wasserlösliches Polymer, umfassend Polyvinylalkohol und modifizierte Produkte von Polyvinylalkohol, wobei, wenn eine 4%ige wässrige Lösung des wasserlöslichen Polymers bei 20 °C vorliegt, die 4%ige wässrige Lösung eine Viskosität in einem Bereich von 35 mPa-s bis 110 mPa-s aufweist, wobei ein Komponentenverhältnis des wasserlöslichen Polymers in einem Bereich von 0,1% Gew./Gew. der chemischen Beschichtungszusammensetzung bis 3% Gew./Gew. der chemischen Beschichtungszusammensetzung liegt;
mindestens eine wasserlösliche Verbindung, die mindestens eine saure Gruppe und mindestens eine basische Gruppe aufweist und ein Absorptionsmaximum von mehr als 330 nm in wässriger Lösung aufweist, wobei ein Komponentenverhältnis der mindestens einen wasserlöslichen Verbindung in einem Bereich von 0,01 Gew.-% der chemischen Beschichtungszusammensetzung bis 5 Gew.-% der chemischen Beschichtungszusammensetzung liegt;
eine Vielzahl von Mikrokapseln, wobei die Vielzahl von Mikrokapseln jeweils einen basischen Farbstoffvorläufer verkapselt; und
eine Elektronenakzeptorverbindung jeweils außerhalb der Vielzahl von Mikrokapseln, wobei, wenn die chemische Beschichtungszusammensetzung bei 25 °C vorliegt, eine Viskosität der chemischen Beschichtungszusammensetzung in einem Bereich von 10 mPa-s bis 300 mPa-s liegt.

## Revendications

1. Composition de revêtement chimique pour matériau d'enregistrement afin d'enregistrer une image par irradiation d'un faisceau laser, la composition de revêtement chimique comprenant :
un polymère hydrosoluble comprenant de l'alcool polyvinylique et des produits modifiés d'alcool polyvinylique, dans laquelle, lorsqu'une solution aqueuse à 4 % du polymère hydrosoluble est à 20°C, la solution aqueuse à 4 % a une viscosité dans la plage de 35 mPa·s à 110 mPa·s, dans laquelle un rapport de composants du polymère hydrosoluble est dans une plage de 0,1 % en poids/poids de la composition de revêtement chimique à 3 % en poids/poids de la composition de revêtement chimique ;
au moins un composé hydrosoluble qui a au moins un groupe acide et au moins un groupe basique, et a une absorption maximale à plus de 330 nm en solution aqueuse, dans laquelle un rapport de composants du composé hydrosoluble se situe dans une plage de 0,01 % en poids/poids de la composition de revêtement chimique à 5 % en poids/poids de la composition de revêtement chimique ;
une pluralité de microcapsules, chacune de la pluralité de microcapsules encapsulant un précurseur de colorant basique ; et
un composé accepteur d'électrons externe à chacune de la pluralité de microcapsules,
dans laquelle, lorsque la composition de revêtement chimique est à 25°C, une viscosité de la composition de revêtement chimique est comprise dans l'intervalle de 10 mPa·s à 300 mPa·s.

2. Composition de revêtement chimique selon la revendication 1, dans laquelle le composé hydrosoluble a un poids moléculaire compris dans la plage de 200 à 5 000 unités de masse atomique.

3. Composition de revêtement chimique selon la revendication 1, dans laquelle les groupes acides du composé hydrosoluble sont partiellement ou complètement neutralisés.

4. Procédé d'enregistrement d'une image, comprenant les étapes consistant à : irradier un laser à CO₂ ayant une longueur d'onde dans la plage de 9 µm à 11 µ sur un matériau d'enregistrement, dans lequel la couche d'enregistrement comprend :
un polymère hydrosoluble comprenant de l'alcool polyvinylique et des produits modifiés d'alcool polyvinylique, dans lequel, lorsqu'une solution aqueuse à 4 % du polymère hydrosoluble est à 20°C, la solution aqueuse à 4 % à une viscosité dans la plage de 35 mPa·s à 110 mPa·s, dans lequel un rapport de composants du polymère hydrosoluble est dans la plage de 0,1 % en poids/poids de la composition de revêtement chimique à 3 % en poids/poids de la composition de revêtement chimique ;
au moins un composé hydrosoluble qui a au moins un groupe acide et au moins un groupe basique, et a une absorption maximale à plus de 330 nm en solution aqueuse, dans lequel un rapport de composants du au moins un composé hydrosoluble est dans une plage de 0,01 % en poids/poids de la composition de revêtement chimique à 5 % en poids/poids de la composition de revêtement chimique ;
une pluralité de microcapsules, chacune de la pluralité de microcapsules encapsulant un précurseur de colorant basique ; et
un composé accepteur d'électrons externe à chacune de la pluralité de microcapsules, dans lequel, lorsque la composition de revêtement chimique est à 25°C, une viscosité de la composition de revêtement chimique est dans une plage de 10 mPa·s à 300 mPa·s.
